# EUROPEAN PATENT APPLICATION

(11) **EP 4 729 143 A1**
(43) Date of publication of application: **22.04.2026**
(21) Application number: 25209865.2
(22) Date of filing: 20.10.2025
(51) Int. Cl.: B01D 3/00

(54) **METHOD AND SYSTEM FOR DISTILLING AN ALCOHOLIC MIXTURE**

(30) Priority: 21.10.2024 AU 2024903394
(71) Applicant: Hawkes Bay Nominees Limited, 4156 Hastings (NZ)
(72) Inventor: WILLIAMS, Paul Douglas, 4156 HASTINGS (NZ); WILLIAMS, Gerald David, 4156 HASTINGS (NZ)
(74) Representative: Dondi, Silvia

(57) **Abstract**

A distillation system for distilling an alcoholic mixture, the system comprising: a distillation vessel adapted for containing a liquid alcoholic mixture at reduced pressure; one or more evaporators located within the distillation vessel for distilling at least a portion of the liquid alcoholic mixture at a liquid alcoholic mixture temperature below about 65° C, the evaporators being thermodynamically coupled with one or more condenser coils of an external heat pump assembly to extract heat from the condenser coils of the heat pump assembly to provide an alcoholic distillate; one or more condensers being located in the distillation vessel for condensing at least a portion of the alcoholic distillate with one or more condensers in the vessel at a temperature of from about 15°C to 25°C to provide a first alcoholic condensate, the condensers being thermodynamically coupled with one or more evaporator coils of the heat pump assembly such that at least a portion of the heat released from the condensers is directed back to one or more evaporator coils of the heat pump assembly.

## Description

### TECHNICAL FIELD

The present invention relates to methods and systems or apparatus for making an alcoholic beverage, e.g., gin or any other spirits and the alcoholic beverage product of that method. In particular, the invention relates to methods for making an alcoholic beverage comprising, for example, distilling a mixture comprising ethanol in an evaporation apparatus by reducing the pressure within the evaporation apparatus.

### BACKGROUND

Many alcoholic beverages are produced using multiple-step processes comprising one or more of the steps of (1) producing ethanol by fermentation of sugars, grains, juices, or other produce; (2) distilling the product of fermentation at elevated temperatures to produce ethanolic spirits; and (3) aging the ethanolic spirits until the beverage possesses desirable flavour, aroma, and colour characteristics. The commercial production of alcohol by distillation has been in widespread operation for many years. For example, the distillation of a mixture of alcohol and water has been performed using an evaporation apparatus or retort in which the mixture is heated, and a condenser into which vapor from the evaporation apparatus is passed for cooling and condensing. Additionally, it has been disclosed that London dry gin is distilled at high proof in column stills often under reduced pressure at about 57° C. to avoid thermal decomposition and enhance smoothness.

Such arrangements require a heat source which contributes substantially both to the cost of the apparatus and to the cost of operating the same. Furthermore, distillations which include heating the alcoholic mixture, including mild heating, can lead to thermal degradation of the mixture's components, leading to loss of flavour of the distilled alcoholic beverage. Safety is also a concern with the use of a high temperature operation. Additionally, high temperature distillation can lead to leaching of impurities from the walls of the apparatus itself and also leaking of flammable vapours. It is therefore desirable to find an improved distillation method and system that addresses some of these concerns.

Any references to methods, apparatus or documents of the prior art are not to be taken as constituting any evidence or admission that they formed, or form part of the common general knowledge.

### SUMMARY OF INVENTION

In an aspect, the invention provides a method for distilling an alcoholic mixture, the method comprising:
reducing internal pressure in a distillation vessel containing a liquid alcoholic mixture;
distilling at least a portion of the liquid alcoholic mixture at a liquid alcoholic mixture temperature below about 65° C by using one or more evaporators in the distillation vessel, the one or more evaporators being thermodynamically coupled with one or more condenser coils of an external heat pump assembly to extract heat from the one or more condenser coils of the heat pump assembly to provide an alcoholic distillate;
condensing at least a portion of the alcoholic distillate with one or more condensers in the distillation vessel at a temperature of from about 15°C to 30°C to provide a first alcoholic condensate such that at least a portion of the heat released from the one or more condensers is directed back to one or more evaporator coils of the heat pump assembly.

In another aspect, there is provided a distillation system for distilling an alcoholic mixture, the distillation system comprising:
a distillation vessel adapted for containing a liquid alcoholic mixture at reduced pressure;
one or more evaporators located within the distillation vessel for distilling at least a portion of the liquid alcoholic mixture at a liquid alcoholic mixture temperature below about 65° C, the one or more evaporators being thermodynamically coupled with one or more condenser coils of an external heat pump assembly to extract heat from the one or more condenser coils of the heat pump assembly to provide an alcoholic distillate;
one or more condensers being located in the distillation vessel for condensing at least a portion of the alcoholic distillate with one or more condensers in the distillation vessel at a temperature of from about 15°C to 30°C to provide a first alcoholic condensate, the one or more condensers being thermodynamically coupled with one or more evaporator coils of the heat pump assembly such that at least a portion of the heat released from the one or more condensers is directed back to one or more evaporator coils of the heat pump assembly.

In an embodiment, a first heat exchanging arrangement is provided between the one or more condenser coils of the heat pump assembly and the evaporators of the distillation vessel such that the evaporators extract heat from the heat exchange arrangement for carrying out said distillation.

In an embodiment, a heat recovery arrangement is provided between the one or more condensers of the distillation vessel and the one or more evaporator coils of the heat pump assembly for recovering heat from the one or more condensers and directing said recovered heat to the one or more evaporator coils of the heap pump assembly.

In an embodiment, the heat recovery arrangement is thermodynamically coupled with one or more additional heat sources.

In an embodiment, the heat recovery arrangement is thermodynamically coupled with a low temperature thermal energy storage module to optionally extract heat from said low temperature thermal energy storage module for directing heat to the one or more evaporator coils of the heat pump assembly.

In an embodiment, heat recovery arrangement is configured for recovering heat from a vacuum pump that is operatively coupled to the distillation vessel.

In an embodiment, the vacuum pump is thermodynamically coupled with the low temperature thermal energy storage module to transfer heat from the vacuum pump to the low temperature thermal energy storage module.

In an embodiment, the heat recovery arrangement is configured for recovering heat from walls of the distillation vessel.

In an embodiment, the distillation system further comprises a high temperature thermal energy storage module that is thermodynamically coupled with the one or more condenser coils of the heat pump assembly to extract excess heat from the one or more condenser coils of the heat pump assembly.

In an embodiment, at least the heat pump assembly is powered by one or more renewable energy sources.

In another aspect, there is provided a method for distilling an alcoholic mixture, the method comprising:
reducing internal pressure in a distillation vessel containing a liquid alcoholic mixture;
distilling at least a portion of the liquid alcoholic mixture at a liquid alcoholic mixture temperature below about 65° C by using one or more evaporators, the one or more evaporators being thermodynamically coupled via a refrigerant with a vapour compressor to heat the refrigerant resulting in a heated vapour phase refrigerant,
providing an expansion valve to receive the heat depleted refrigerant and expand said heat depleted refrigerant to further lower the temperature of the refrigerant and form a cooled liquid phase refrigerant; c ondensing at least a portion of the alcoholic distillate with one or more condensers in the distillation vessel at a temperature of from about 15°C to 30°C to provide a first alcoholic condensate such that the cooled refrigerant from the output of the expansion valve is thermodynamically coupled with the one or more condensers;
circulating the liquid refrigerant from the one or more condensers through one or more evaporators to cause the liquid refrigerant to change phase to vapour, then back to the vapour compressor such that the refrigerant flows in a closed loop between the compressor, the one or more evaporators, the expansion valve and the one or more condensers.

In yet another aspect, there is provided a distillation system for distilling an alcoholic mixture, the distillation system comprising:
a distillation vessel adapted for containing a liquid alcoholic mixture at reduced pressure;
one or more evaporators located within the distillation vessel for distilling at least a portion of the liquid alcoholic mixture at a liquid alcoholic mixture temperature below about 65° C, the one or more evaporators being thermodynamically coupled via a refrigerant with a vapour compressor to extract heat from the refrigerant resulting in a heat depleted vapour phase refrigerant to provide an alcohol distillate;
an expansion valve to receive the heat depleted refrigerant and expand said heat depleted refrigerant to further lower the temperature of the refrigerant and form a cooled liquid phase refrigerant;
one or more condensers being located in the distillation vessel for condensing at least a portion of the alcoholic distillate with one or more condensers in the distillation vessel at a temperature of from about 15°C to 30°C to provide a first alcoholic condensate, the one or more condensers being thermodynamically coupled with the output of the expansion valve,
wherein the refrigerant flows in a closed loop between the compressor, the one or more evaporators, the expansion valve and the one or more condensers.

### BRIEF DESCRIPTION OF THE DRAWINGS

Preferred features, embodiments and variations of the invention may be discerned from the following Detailed Description which provides sufficient information for those skilled in the art to perform the invention. The Detailed Description is not to be regarded as limiting the scope of the preceding Summary of the Invention in any way. The Detailed Description will make reference to a number of drawings as follows:
Figure 1 is a schematic diagram outlining a method and system 1000 for distilling an alcoholic mixture in accordance with a first embodiment.
Figure 2 is a schematic diagram outlining an auxiliary heat recovery arrangement.
Figure 3 is a schematic diagram outlining a method and system 2000 for distilling an alcoholic mixture in accordance with a second embodiment.

### DETAILED DESCRIPTION OF PREFERRED EMBODIMENTS

Distillation is a known process for purifying a substance and involves vaporizing a substance, condensing the vapor and collecting the purified substance as a condensate. It is an important method used for purifying a liquid. Distillation is useful for, e.g., separating a mixture when the components have different boiling points. Several kinds of distillation techniques for binary and/or multi-component mixtures are known and practiced in the art. Vacuum distillation may sometimes also be referred to as "molecular" or "short path" distillation. The reduced pressure distillation of an alcoholic mixture of the present invention is advantageous in that it, inter alia, improves the quality of the alcoholic condensate and/or the efficiency of distillation, especially when alcoholic mixtures with high boiling temperatures are present and/or where thermally sensitive components are present.

Reduced pressure distillations known in the art use temperatures in the range of 50-60° C. By conducting the distillation of alcoholic mixtures at reduced pressure pursuant to the present invention, the temperatures required can be lower than those required in conventional distillations (typically 80-90°C) performed at ambient, e.g., atmospheric, pressure. The present invention also provides a much more energy efficient method for vacuum or reduced pressure distillation.

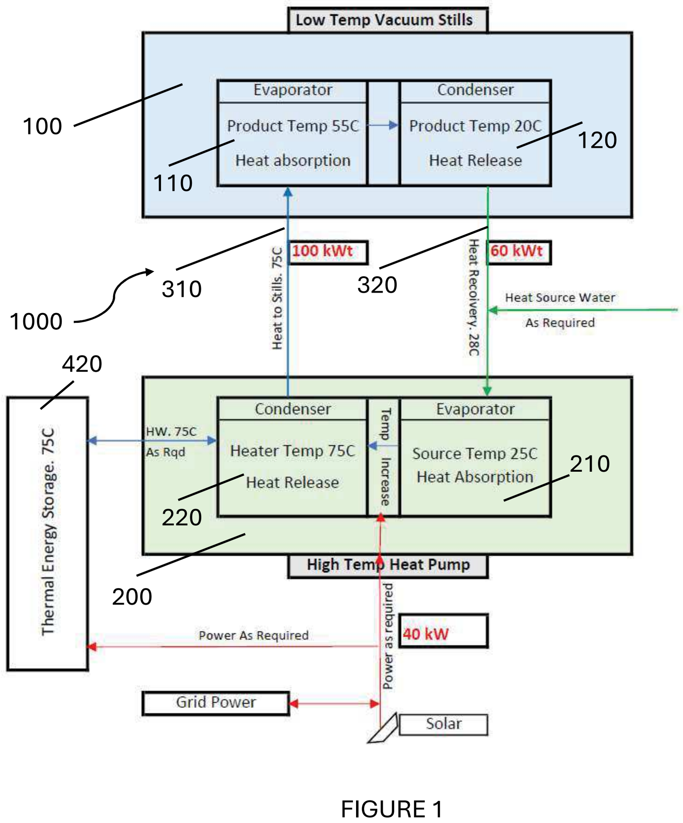

Referring to Figure 1, a distillation system 1000 comprises one or more vacuum distillation sills generally denoted by 100. The following description refers to a single Vacuum still 100. However, it should be understood that a plurality of vacuum stills 100 may be used in conjunction with the presently described method and system.

The vacuum still 100 comprises evaporator apparatus 110 and condenser apparatus 120. The evaporation apparatus 110 evaporates a portion of the alcoholic mixture and the resulting alcoholic distillate is cooled and condensed in the condensation apparatus 120 for recovery as an alcoholic condensate. The evaporation apparatus 110 may comprise a still or an equivalent vessel or tank, such as a distillation vessel, for example. The evaporation apparatus 110 contemplated for use in the present invention can be any type of apparatus used for evaporating a liquid known to one of skill in the art, for example, a pot still which is well known in the art for distillation process involving whiskys and gins. Other non-limiting evaporation apparatuses may also include a column still, solar still, reflux still, coffee still, alembic still, retort still and the like.

In one embodiment, the evaporation apparatus has double walls in order to be better able to accommodate large volumes of fluid alcoholic mixture under reduced pressure. The double walls enclose (1) insulation for heat retention, whereas other stills are uninsulated and waste heat. Without insulation the process cannot be properly controlled, as environmental conditions (ie seasons, day/ night temperatures, even opening a door to the distillery room on a cold day) cause different rates of reflux and change the flavour. and (2) the double walls enclose water jackets for heating and / or cooling the vessels.

In another embodiment, the evaporation apparatus 110 comprises a heat jacket. In another embodiment, at least a portion of evaporation apparatus wall comprises glassware that is see-through. In another embodiment, the material from which the evaporation apparatus may comprise polyurethane.

In one embodiment, the evaporation apparatus 110 further comprises a means for supplying the starting alcoholic mixture thereto and ascertaining its level, thereby aiding in having the desired amount of alcoholic mixture in the evaporation apparatus throughout. For example, an inlet port is provided, such as pipes and and a level device for detecting the level of fluid therein is provided, for example liquid gauge. The evaporation apparatus 110 operates under an environment reduced in pressure relative to atmospheric pressure, e.g., as generated by vacuum pump, respectively. Therefore, in another embodiment a means for isolating the atmosphere in the distillation vessel from the atmosphere in, e.g., the inlet port, is provided. This can be any such apparatus known in the art, including a valve, a check valve, a one-way valve, a removable cover, or the like.

In one embodiment, at least one exit from the distillation vessel 100, e.g., drain is provided. In another embodiment, the exit is at or near the bottom of the distillation vessel. The exit is normally closed with a means for doing so known in the art, e.g., a valve, a check valve, a one-way valve, a removable cover, or the like. The exit is closed so that, e.g., the alcoholic mixture can remain in the distillation vessel and/or reduced pressure may be maintained inside the distillation vessel, but it may be opened, e.g., for cleaning, maintenance, removing residual alcoholic mixture, solids, sediment, sludge, and the like. A connection, e.g., conduit is in fluid communication with and directs alcoholic distillate from the evaporation apparatus to the condensation apparatus, e.g., condenser assembly.

In one embodiment, the condensation apparatus 120 may have a condensation chamber or condenser(s) to receive, cool and condense the alcoholic distillate to an alcoholic condensate. The condensation apparatus 120 is in fluid communication with the connection. In another embodiment, the condensation apparatus is located in close proximity to the evaporation apparatus 110, thereby minimizing the potential for condensation in the connection and promoting efficient operation. The condensation apparatus 120 may comprise a single or a plurality of condensation chambers which are in fluid communication through a bridge, e.g., pipe. In other embodiments, a condensation member(s) is the site within a condensation chamber where the alcoholic distillate is condensed to an alcoholic concentrate. A condensation member can take the form of multiple cooling tubes (greater than 100) with cold fluid circulating through the cooling tubes to cool the vapour below condensation temperature. Other condensing members may include a baffle, plates or coils, any combination thereof, or any other structure known to one of skill in the art. Methods for achieving the desired temperature of a condensation member are discussed below.

In one embodiment, at least one exit from each condensation chamber is provided. As the condensation apparatus 120 operates under reduced pressure, in another embodiment a means for isolating the atmosphere in each condensation chamber from the atmosphere in, e.g., the exit therefrom, is provided. This can be any such apparatus known in the art, including a valve, a check valve, a one-way valve, a removable cover, or the like. In another embodiment, the alcoholic condensate is drained from a condensation chamber under the influence of gravity. In another embodiment, an exit may be connected to an assisting means, e.g., product pump for carrying the alcoholic condensate away from the condensation apparatus. In yet another embodiment, a plurality of pot stills or vessels may be connected in series such that the outlet of the evaporator from a first vessel is connected in series to the next vessel in sequence and the outlet for the last vessel is then connected to a condenser.

The distillation system 1000 also comprises a heat pump assembly 200 that is thermodynamically coupled with individual components of the distillation vessel or vacuum stills 100 as will be described in the foregoing sections. A heat pump uses technology similar to that found in a refrigerator or an air conditioner. It extracts heat from a source, such as the surrounding air or nearby sources of water or waste heat from a factory. The heat pump assembly 200 then amplifies and transfers the heat to where it is needed. Because most of the heat is transferred rather than generated, heat pumps are far more efficient than conventional heating technologies such as boilers or electric heaters and can be cheaper to run. The output of energy in the form of heat is normally several times greater than that required to power the heat pump, normally in the form of electricity.

Specifically, the evaporation apparatus 110 from the distillation vessel 100 is thermodynamically coupled to one or more condenser coils 220 of the heat pump assembly 200. In the presently described embodiment, heat required by the evaporation apparatus 110 to carry out evaporation of the alcohol mixture at a temperate range of 40°C to 65°C is extracted from heat released by the condenser coils 220 of the heat pump assembly 200. A heat exchanging arrangement 310 such as but not limited to working fluid tubes (the working fluid may be water or any other suitable fluid conveying heat at a temperature of say 75°C) is provided to transfer heat generated from the condenser coils 220 to the evaporator apparatus 110 for the vacuum stills 100 to carry out evaporation at the working temperature of 50°C to 65°C under reduced pressure conditions. The heat exchanging arrangement 310 may also be thermodynamically coupled with a high temperature thermal storage module 420 to store or recover any excess heat from the condenser coils 220 which is not required for the evaporation being carried out in the evaporators 110.

Similarly, a heat recovery arrangement 320 is provided between the condensation apparatus 120 of the distillation vessel 100 and the evaporator coils 210 of the heat pump assembly 200 for recovering heat from the condensers and directing the recovered heat to the evaporator coils of the heap pump assembly 200. The heat recovery arrangement 320 may also include working fluid in tubes for recovering and directing heat back to the evaporator coils 210 of the heat pump assembly 200.

The heat pump 200 as shown in Figure 1 is preferably a high temperature heat pump that is rated to heat water or another working fluid from ambient temperature to temperatures around 75°C.

The integration of the heat pump assembly 200, particularly by thermodynamically coupling the condenser coils 220 and evaporator coils 210 of the heat pump assembly with the evaporator apparatus 110 and condensation apparatus 120 respectively to form a closed loop renders the distillation system more efficient by utilizing and recycling heat during the process.

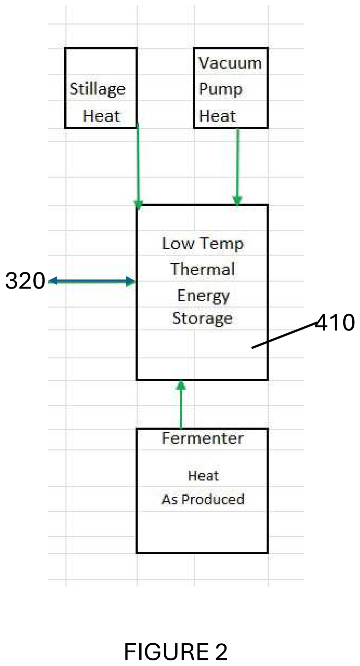

The heat recovery arrangement 320 may also be coupled to a low temperature thermal storage module 410. In some embodiments, the thermal storage module may take the form of water tank which may be used to store heat and exchange heat with the heat recovery arrangement 320. The low temperature storage module 410 is also thermodynamically coupled to recover waste heat dissipated by the vacuum pump or heat given out by walls of the vacuum still 100 or the fermenter as shown in Figure 2.

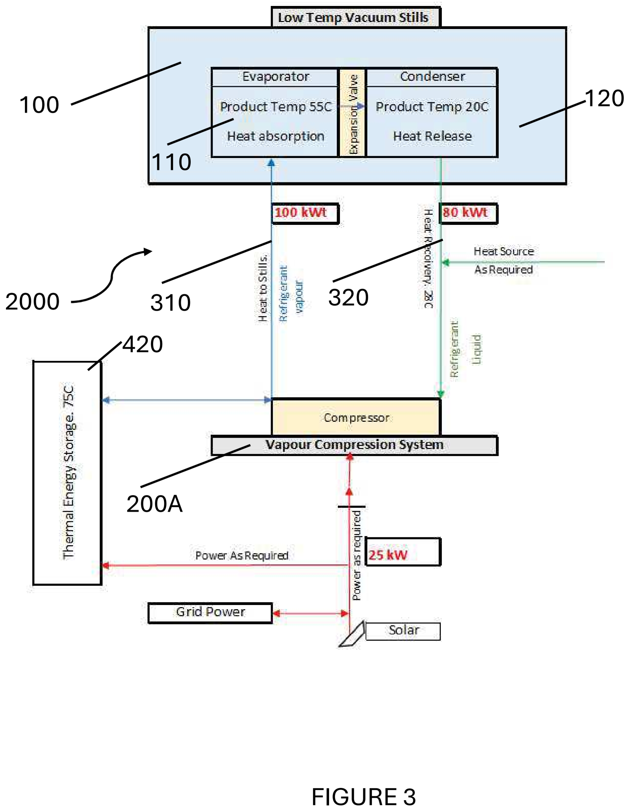

Referring to Figure 3, an alternative embodiment of a distillation system 2000 has been illustrated. The mani difference relates to the heat pump arrangement 200 (described in the previous embodiment) that has been replaced by a vapour compression apparatus 200A. Like reference numerals described like features that have been described in the previous sections. The heat pump 200's condenser and evaporator are eliminated entirely. The vapour compression apparatus 200A directly heats the existing evaporator 110 and cools the existing condenser 120 which are part of the distillation apparatus 100. The distillation system 2000 in principle functions in the same manner as the previously described distillation system 1000 except that the evaporator 110 and condenser 120 is directly heated and cooled by a refrigerant of the vapour compression system 200A.

The vapour compression system comprises a vapour compressor that is interconnected in a closed loop with the evaporator 110 and the condenser 120. The compressor compresses the refrigerant vapour and results in increase in pressure and temperature of the vapour which is then directed to the in-loop evaporator 110 which assists with raising the temperature of the alcohol mixture to carry out the distillation process. Unlike the previous embodiment, where water is used, in the present embodiment a refrigerant is used. The heated refrigerant vapour loses heat in the evaporator 110 as it heats the temperature of the alcoholic beverage mixture.

An expansion valve is provided between the evaporator 110 and the condenser 120. The refrigerant, after losing heat is circulated through the expansion valve which results in the temperature of the refrigerant to be lowered as there is expansion of the refrigerant via the expansion valve which is also accompanied by heat release. The refrigerant is redirected back to the compressor for another compression cycle. In some ways, the vapour compression system 200A also functions as a heat pump when the inline evaporator 110 and the inline condenser 120 is taken into account alongwith the expansion valve and the refrigerant.

The advantages of the distillation system 2000 include but are not limited to improved efficiency, due to elimination of the 2 heat exchanger's (condenser and evaporator) losses. It has been found that adopting the vapour compression system results in improvement in recuperation of heat to 80% (from 60%), while the electricity input goes down to about 25% (from 40%). These gains are due to the lower temperature needed to be reached by the vapour compression system (VCS), which reflects in a much higher COP (Coefficient Of Performance) by the VCS because it is running at reduced temp due to the direct coupling. For every kW of electricity input to the VCS, the heat output will increase significantly. The COP with a heat pump is about 2 (2 units of heat energy out for every 1 unit of electrical energy used). This VCS increases this to about 3.5 (3.5 units out for 1 unit in). For larger equipment, higher performance refrigerants such as ammonia can be used, raising the COP up to 6 or more.

The use of the VCS not only reduces the energy, but balances up the cooling demand. For successive daily operation, since heat is being added to the system (from the electricity) the cooling water tank in a HP system gradually gets hotter, eventually requiring some heat dumping to lower its temperature to the range required by the condenser and fermenter. In the VCS, natural cooling from losses is sufficient, or in a very highly worked system, may require some cooling, equal to energy in after losses.

is forced by the expansion valve and the suction effect of the compressor to change from a liquid to a gas within the evaporator.

Furthermore, the heat pump assembly 200 may be powered by conventional or renewal energy sources.

In compliance with the statute, the invention has been described in language more or less specific to structural or methodical features. The term "comprises" and its variations, such as "comprising" and "comprised of" is used throughout in an inclusive sense and not to the exclusion of any additional features.

It is to be understood that the invention is not limited to specific features shown or described since the means herein described comprises preferred forms of putting the invention into effect.

The invention is, therefore, claimed in any of its forms or modifications within the proper scope of the appended claims appropriately interpreted by those skilled in the art.

## Claims

1. A method for distilling an alcoholic mixture, the method comprising:
reducing internal pressure in a distillation vessel (100) containing a liquid alcoholic mixture;
distilling at least a portion of the liquid alcoholic mixture at a liquid alcoholic mixture temperature below about 65° C by using one or more evaporators (110) in the distillation vessel (100), the one or more evaporators (110) being thermodynamically coupled with one or more condenser coils (220) of an external heat pump assembly (200) to extract heat from the one or more condenser coils (220) of the heat pump assembly (200) to provide an alcoholic distillate;
condensing at least a portion of the alcoholic distillate with one or more condensers (120) in the distillation vessel (100) at a temperature of from about 15°C to 30°C to provide a first alcoholic condensate such that at least a portion of the heat released from the one or more condensers (120) is directed back to one or more evaporator coils (210) of the heat pump assembly (200).

2. The method in accordance with claim 1 wherein a first heat exchanging arrangement (310) is provided between the one or more condenser coils (220) of the heat pump assembly (200) and the evaporators (110) of the distillation vessel (100) such that the evaporators (110) extract heat from the heat exchange arrangement for carrying out said distillation.

3. The method in accordance with claim 1 or claim 2 wherein a heat recovery arrangement (320) is provided between the one or more condensers (120) of the distillation vessel (100) and the one or more evaporator coils (210) of the heat pump assembly (200) for recovering heat from the one or more condensers (120) and directing said recovered heat to the one or more evaporator coils (210) of the heap pump assembly (200).

4. The method in accordance with claim 3 wherein the heat recovery arrangement (320) is thermodynamically coupled with one or more additional heat sources.

5. The method in accordance with claim 3 or 4 wherein the heat recovery arrangement (320) is thermodynamically coupled with a low temperature thermal energy storage module (410) to optionally extract heat from said low temperature thermal energy storage module (410) for directing heat to the one or more evaporator coils (210) of the heat pump assembly (200).

6. The method in accordance with claim 3 or 4 or 5 wherein the heat recovery arrangement (320) is configured for recovering heat from a vacuum pump that is operatively coupled to the distillation vessel (100).

7. The method in accordance with claim 6 wherein the vacuum pump is thermodynamically coupled with the low temperature thermal energy storage module (410) to transfer heat from the vacuum pump to the low temperature thermal energy storage module (410).

8. The method in accordance with any one of claims 3 to 7 wherein the heat recovery arrangement (320) is configured for recovering heat from walls of the distillation vessel (100).

9. The method in accordance with any one of the preceding claims further comprising a high temperature thermal energy storage module (420) that is thermodynamically coupled with the one or more condenser coils (220) of the heat pump assembly (200) to extract excess heat from the one or more condenser coils (220) of the heat pump assembly (200).

10. The method in accordance with any one of the preceding claims wherein at least the heat pump assembly (200) is powered by one or more renewable energy sources.

11. A distillation system (1000; 2000) for distilling an alcoholic mixture, the distillation system (1000; 2000) comprising:
a distillation vessel (100) adapted for containing a liquid alcoholic mixture at reduced pressure;
one or more evaporators (110) located within the distillation vessel (100) for distilling at least a portion of the liquid alcoholic mixture at a liquid alcoholic mixture temperature below about 65° C, the one or more evaporators (110) being thermodynamically coupled with one or more condenser coils (220) of an external heat pump assembly (200) to extract heat from the one or more condenser coils (220) of the heat pump assembly (200) to provide an alcoholic distillate;
one or more condensers (120) being located in the distillation vessel (100) for condensing at least a portion of the alcoholic distillate with one or more condensers (120) in the distillation vessel (100) at a temperature of from about 15°C to 30°C to provide a first alcoholic condensate, the one or more condensers (120) being thermodynamically coupled with one or more evaporator coils (210) of the heat pump assembly (200) such that at least a portion of the heat released from the one or more condensers (120) is directed back to one or more evaporator coils (210) of the heat pump assembly (200).

12. The distillation system (1000; 2000) in accordance with claim 11 wherein a first heat exchanging arrangement (310) is provided between the condenser coils (220) of the heat pump assembly (200) and the evaporators (110) of the distillation vessel (100) such that the evaporators (110) extract heat from the heat exchange arrangement for carrying out said distillation.

13. A method for distilling an alcoholic mixture, the method comprising:
reducing internal pressure in a distillation vessel (100) containing a liquid alcoholic mixture;
distilling at least a portion of the liquid alcoholic mixture at a liquid alcoholic mixture temperature below about 65° C by using one or more evaporators (110), the one or more evaporators (110) being thermodynamically coupled via a refrigerant with a vapour compressor to heat the refrigerant resulting in a heated vapour phase refrigerant to provide an alcoholic distillate,
providing an expansion valve to receive the heat depleted refrigerant and expand said heat depleted refrigerant to further lower the temperature of the refrigerant and form a cooled liquid phase refrigerant;
condensing at least a portion of the alcoholic distillate with one or more condensers (120) in the distillation vessel (100) at a temperature of from about 15°C to 30°C to provide a first alcoholic condensate such that the cooled refrigerant from the output of the expansion valve is thermodynamically coupled with the one or more condensers (120);
circulating the liquid refrigerant from the one or more condensers (120) through the one or more evaporators (110) to cause the liquid refrigerant to change phase to vapour phase, then back to the vapour compressor such that the refrigerant flows in a closed loop between the compressor, the one or more evaporators (110), the expansion valve and the one or more condensers (120).

14. A distillation system for distilling an alcoholic mixture, the distillation system comprising:
a distillation vessel (100) adapted for containing a liquid alcoholic mixture at reduced pressure;
one or more evaporators (110) located within the distillation vessel (110) for distilling at least a portion of the liquid alcoholic mixture at a liquid alcoholic mixture temperature below about 65° C, the one or more evaporators (110) being thermodynamically coupled via a refrigerant with a vapour compressor to extract heat from the refrigerant resulting in a heat depleted vapour phase refrigerant to provide an alcohol distillate;
an expansion valve to receive the heat depleted refrigerant and expand said heat depleted refrigerant to further lower the temperature of the refrigerant and form a cooled liquid phase refrigerant;
one or more condensers (120) being located in the distillation vessel (100) for condensing at least a portion of the alcoholic distillate with one or more condensers (120) in the distillation vessel (100) at a temperature of from about 15°C to 30°C to provide a first alcoholic condensate, the one or more condensers (120) being thermodynamically coupled with the output of the expansion valve,
wherein the refrigerant flows in a closed loop between the compressor, the one or more evaporators (110), the expansion valve and the one or more condensers (120).
